# EUROPÄISCHE PATENTSCHRIFT

(11) **EP 0 960 462 B1**
(45) Veröffentlichungstag und Bekanntmachung des Hinweises auf die Patenterteilung: **10.12.2003**
(21) Anmeldenummer: 98909434.7
(22) Anmeldetag: 10.02.1998
(51) Int. Cl.: H02K 5/14

(54) **BÜRSTENHALTEANORDNUNG**
BRUSH-HOLDING DEVICE
SYSTEME DE SUPPORT DE BALAIS

(30) Priorität: 15.02.1997 DE 19705833
(43) Veröffentlichungstag der Anmeldung: 01.12.1999
(73) Patentinhaber: Valeo Wischersysteme GmbH, 74321 Bietigheim-Bissingen (DE)
(72) Erfinder: WALTHER, Bernd, D-74321 Bietigheim-Bissingen (DE)
(74) Vertreter: Dreiss, Fuhlendorf, Steimle & Becker
(86) Internationale Anmeldenummer: EP9800737
(87) Internationale Veröffentlichungsnummer: WO98036484

(56) Entgegenhaltungen:
- EP-A- 0 489 940
- DE-U- 9 006 935
- FR-A- 1 576 799
- FR-A- 2 605 154
- GB-A- 2 248 348

## Beschreibung

Die Erfindung betrifft eine Bürstenhalteanordnung mit Bauelementen zum elektrischen Anschluß, zur Temperaturüberwachung und Funkentstörung von Elektromotoren mit den Merkmalen des Oberbegriffs des Patentanspruches 1.

Eine derartige Bürstenhalteanordnung ist beispielsweise aus der EP 489 940 A1 bekannt. Nachteilig ist bei dieser Halteanordnung der große Platzbedarf in axialer und radialer Richtung. Der axiale Platzbedarf wird insbesondere verursacht durch eine separate Leiterplatte für elektrische Bauteile, welche im Abstand zu der ersten Leiterplatte in einer zweiten Ebene angeordnet ist und mit einem gesonderten Kontaktelement mit Strom versorgt wird. Das Kontaktelement erstreckt sich ebenfalls vorwiegend in axialer Richtung. Die insgesamt notwendige Baulänge der Bürstenhaltenordnung aber auch die Montage des gesonderten Kontaktelementes ist nachteilig. Die FR-A-1,576,799 offenbart zwei Leiterplatten, die jedoch separat gehandhabt und eingebaut werden müssen, was unter Umständen schwierig ist und Probleme mit sich bringen kann.

Aufgabe der vorliegenden Erfindung ist es daher, eine besonders kompakt bauende Bürstenhalteanordnung bereitzustellen, bei der auch die Kontaktierung der elektrischen Bauelemente einfach ohne gesonderte Kontaktelemente oder Verdrahtung vorgenommen werden kann.

Diese Aufgabe wird mit den kennzeichnenden Merkmalen des Patentanspruches 1 dadurch gelöst, daß die Leiterplatte einstückig ist und eine der Ebenen fluchtend sowie axial versetzt zu dem Kommutator angeordnet ist. Mit diesen Merkmalen entfällt einerseits eine separate Kontaktierung der versetzten Ebene und andererseits wird der zur Verfügung stehende Raum optimal genutzt.

Weitere Einzelheiten der Erfindung gehen aus Unteransprüchen im Zusammenhang mit der Beschreibung und der Zeichnung hervor.

Die Erfindung wird nachstehend anhand eines Ausführungsbeispieles, das in der Zeichnung dargestellt ist, näher beschrieben. Es zeigt:
- Fig. 1: Draufsicht auf eine Bürstenhalteanordnung mit eingezeichnetem Kommutator und geschnittenem Motorengehäuse und geschnittener Motorwelle;
- Fig. 2: Schnitt durch die Bürstenhalteanordnung entlang der Linie II-II in Fig. 1 mit schematisch angedeutetem Kommutator.

Die Bürstenhalteanordnung 1 wird radial von dem geschnitten gezeichneten Motorengehäuse 2 umgriffen und weist im wesentlichen einen Grundkörper 3 auf, an dem eine einstückige elektrische Leiterplatte 4 in Form eines Stanzgitters befestigt ist. Der Befestigung dienen beispielsweise Ausnehmungen 5 in der Leiterplatte und diese durchgreifende Zapfen 6 an dem Grundkörper 3. Die Leiterplatte 4 ist einteilig und durch Stanz- und Biegeoperationen aus Blechwerkstoff hergestellt und weist in axialer Richtung mehrere Ebenen auf welche zumindest teilweise an den Grundkörper 3 anliegen. Es sind ferner in Köchern 7,8 geführte Kohlebürsten 9,10 vorgesehen, die einander im wesentlichen gegenüberliegen. Jede der Kohlebürsten 9,10 beaufschlagt federnd den Kommutator 11. In diesem Zusammenhang dient die Leiterplatte 4 der Stromzuführung zu den Kohlebürsten 9,10 bzw. zu Entstörelementen wie beispielsweise einer Spule 12 oder aber einem Thermoschalter 13 zur Temperaturüberwachung des Elektromotors. Wesentlich ist, daß die Bauelemente zur Temperaturüberwachung oder zur Funkentstörung elektrisch leitend mit der Leiterplatte 4 bzw. den Kohlebürsten 9,10 entsprechend dem jeweils vorgeschriebenen Schaltplan, ohne separat zu montierende Kontaktelemente, verbunden sind.

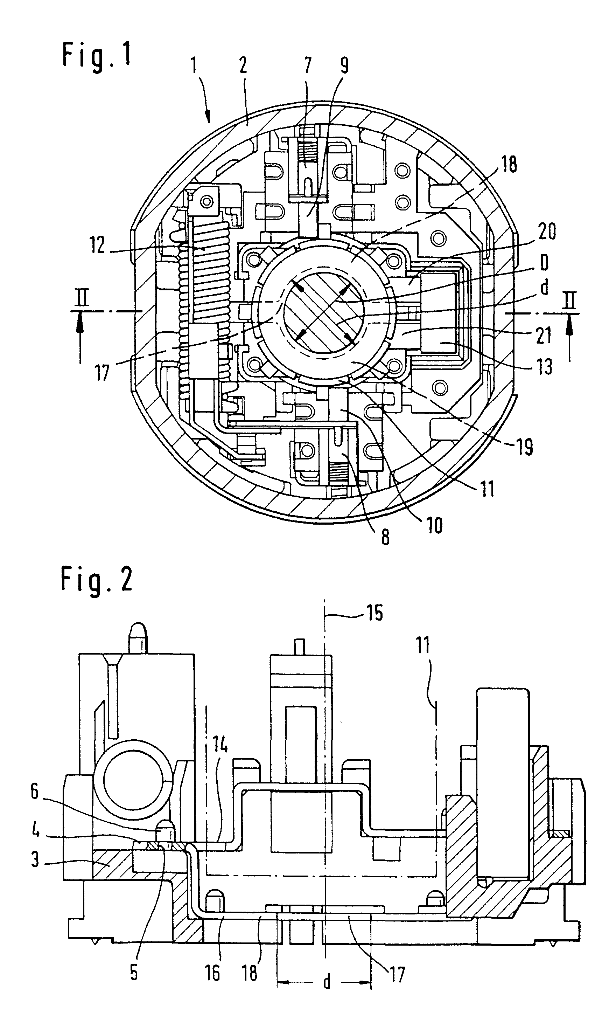

Wie Figur 2 zeigt, weist die Leiterplatte 4 eine erste Ebene 14 und eine in Richtung der Motorachse 15 axial versetzte zweite Ebene 16 auf. Die zweite Ebene 16 ist fluchtend zu dem angedeuteten Kommutator 11 sowie axial versetzt zu diesem angeordnet und übergreift den Kommutator 11 mit zwei Schenkeln 18, 19 an einer Stirnseite. Dadurch wird einerseits der Raum unterhalb des Kommutators für die flache Leiterplatte genutzt und andererseits der Blechwerkstoff der Leiterplatte 4 in diesem Bereich als Kontaktelement herangezogen.

Zur Wellendurchführung weisen die Schenkel 18, 19 eine Öffnung 17 auf, deren Durchmesser d im wesentlichen dem Motorwellendurchmesser D entspricht. Jeder der Schenkel 18, 19 ist elektrisch leitend mit jeweils einer Kontaktfahne 20, 21 des Thermoschalters 13 verbunden. Die Kontaktierung kann beispielsweise durch Löten oder Schweißen erfolgen. Wie die Figur 2 zeigt, greift der Thermoschalter in eine Tasche des Grundkörpers 3 ein, die axial auf gleicher Höhe mit dem Kommutator 11 liegt. Die Kontaktfahnen 20,21 sind nach radial innen in Richtung Schenkel 18,19 abgebogen und liegen nach dem Einsetzen des Thermoschalters auf diesen überlappend auf. Ganz grundsätzlich können auch andere elektrische Bauteile auf gleiche Art und Weise mit der Leiterplatte 4 verbunden werden.

## Patentansprüche

1. Bürstenhalteanordnung für Elektromotoren mit mindestens zwei Kohlebürsten (9, 10), die einen Kommutator (11) beaufschlagen, einem elektrisch isolierenden Grundkörper (3) sowie einer elektrischen Leiterplatte (4) in Form eines Stanzgitters, welche an dem Grundkörper (3) befestigt ist, und die Kohlebürsten (9, 10) mit elektrischen Anschlüssen sowie mit Bauelementen (12, 13) zur Temperaturüberwachung oder Funkentstörung verbindet und mindestens zwei zur Motorachse (15) axial versetzte Ebenen (14, 16) aufweist, **dadurch gekennzeichnet, daß** die Leiterplatte (4) während der Stanz- und Biegeoperationen einstückig ist und mindestens eine der Ebenen (16) fluchtend sowie axial versetzt zu dem Kommutator (11) angeordnet ist.

2. Bürstenhalteanordnung nach Anspruch 1, **dadurch gekennzeichnet, daß** die Ebene (16) mindestens einen Schenkel (18, 19) aufweist, welcher den Kommutator (11) an einer Stirnseite übergreift.

3. Bürstenhalteanordnung nach einem oder mehreren der vorhergehenden Ansprüche, **dadurch gekennzeichnet, daß** der Schenkel (18, 19) eine Öffnung (17) zur Wellendurchführung aufweist, deren Durchmesser d kleiner ist als der Durchmesser des Kommutators (11).

4. Bürstenhalteanordnung nach einem oder mehreren der vorhergehenden Ansprüche, **dadurch gekennzeichnet, daß** der Durchmesser d der Öffnung (17) größer ist, als der Wellendurchmesser D.

## Claims

1. A brush-holding device for electro motors with at least two carbon brushes (9, 10) which feed a commutator (11), an electrically insulating base element (3), and an electrically conductive plate (4) in the form of a grid which is mounted to the base element (3) and which connects the carbon brushes (9, 10) to electrical terminals and components (12, 13) for temperature monitoring and noise suppression, and having at least two planes (14, 16) axially offset to the electromotor axis (15), **characterized in that** the conductive plate (4) is a single piece, and that at least one of the planes (16) is aligned with, and axially offset from, the commutator (11).

2. The brush-holding device according to claim 1, **characterized in that** the plane (16) has at least one leg (18, 19) which extends over the commutator (11) at one end.

3. The brush-holding device according to one or more of the preceding claims, **characterized in that** the leg ( 18, 19) has an opening (17) for passage of a shaft, whose diameter d is smaller than that of the diameter of the commutator (11).

4. The brush-holding device according to one or more of the preceding claims, **characterized in that** the diameter d of the opening (17) is greater than the diameter D of the shaft.

## Revendications

1. Système de support de balais pour des moteurs électriques comprenant au moins deux balais en charbon (9, 10), qui sollicitent un commutateur (11), un corps de base (3) électriquement isolant et une carte imprimée (4) électrique sous forme d'un grillage estampé, qui est fixée sur le corps de base (3), et relie les balais en charbon (9, 10) à des raccords électriques et à des composants (12, 13) pour le contrôle de la température ou l'antiparasitage et présente au moins deux plans (14, 16) décalés axialement par rapport à l'axe du moteur (15), **caractérisé en ce que** la carte imprimée (4) est d'une seule pièce et au moins l'un des plans (16) est aligné ou décalé axialement par rapport au commutateur (11).

2. Système de support de balais selon la revendication 1, **caractérisé en ce que** le plan (16) présente au moins une branche (18, 19), qui recouvre le commutateur (11) sur une face avant.

3. Système de support de balais selon l'une quelconque ou plusieurs des revendications précédentes, **caractérisé en ce que** la branche (18, 19) présente une ouverture (17) pour le passage de l'arbre, dont le diamètre d est inférieur au diamètre du commutateur (11).

4. Système support de balais selon l'une quelconque ou plusieurs des revendications précédentes, **caractérisé en ce que** le diamètre d de l'ouverture (17) est supérieur au diamètre d'arbre D.
